# FASCICULE DE BREVET EUROPEEN

(11) **EP 1 714 498 B1**
(45) Date de publication et mention de la délivrance du brevet: **19.09.2018**
(21) Numéro de dépôt: 05717514.3
(22) Date de dépôt: 31.01.2005
(51) Int. Cl.: H04N 19/11, H04N 19/136, H04N 19/176, H04N 19/192, H04N 19/593

(54) **PROCEDE DE RECHERCHE DE LA DIRECTON DE PREDICTION EN CODAGE VIDEO INTRA-IMAGE**
VERFAHREN ZUR ERMITTLUNG DER OPTIMALEN PRÄDIKTIONSRICHTUNG FÜR INTRA-PRÄDIKTIVE VIDEOKODIERUNG
METHOD FOR DETERMINING THE OPTIMAL PREDICTION DIRECTION FOR VIDEO INTRA-PREDICTION CODING

(30) Priorité: 13.02.2004 EP 04300081
(43) Date de publication de la demande: 25.10.2006
(73) Titulaire: Orange, 75015 Paris (FR)
(72) Inventeur: LORAS, Frédéric, F-78000 Versailles (FR); AMIEL, Jean-Christophe, F-94110 Arcueil (FR)
(86) Numéro de dépôt international: PCT/FR2005/000195
(87) Numéro de publication internationale: WO 2005/088979

(56) Documents cités:
- ZHANG JIANNING ET AL: "A fast intra prediction method for H.264 video coding" PROC SPIE INT SOC OPT ENG; PROCEEDINGS OF SPIE - THE INTERNATIONAL SOCIETY FOR OPTICAL ENGINEERING; APPLICATIONS OF DIGITAL IMAGE PROCESSING XXVI 2003, vol. 5203, 2003, pages 753-761, XP002285980
- BOJUN MENG ET AL: "Efficient intra-prediction algorithm in H.264" PROCEEDINGS OF THE IEEE INTERNATIONAL CONFERENCE ON IMAGE PROCESSING - ICIP, BARCELONA, SPAIN, vol. 3, 14 septembre 2003 (2003-09-14), pages 837-840, XP010669964
- CHANGSUNG KIM ET AL: "Multistage mode decision for intra prediction in H.264 codec" PROCEEDINGS OF THE SPIE - THE INTERNATIONAL SOCIETY FOR OPTICAL ENGINEERING, 2004, SPIE-INT. SOC. OPT. ENG, SAN JOSE, USA, vol. 5308, no. 1, 20 janvier 2004 (2004-01-20), pages 355-363, XP002285981 ISSN: 0277-786X
- WIEGAND T ET AL: "OVERVIEW OF THE H.264/AVC VIDEO CODING STANDARD" IEEE TRANSACTIONS ON CIRCUITS AND SYSTEMS FOR VIDEO TECHNOLOGY, IEEE INC. NEW YORK, US, vol. 13, no. 7, juillet 2003 (2003-07), pages 560-576, XP001169882 ISSN: 1051-8215
- "TEXT OF FINAL COMMITTEE DRAFT OF JOINT VIDEO SPECIFICATION (ITU-T REC. H.264 / ISO/IEC 14496-10 AVC)" INTERNATIONAL ORGANIZATION FOR STANDARDIZATION - ORGANISATION INTERNATIONALE DE NORMALISATION, XX, XX, juillet 2002 (2002-07), pages I-XV,1, XP001100641

## Description

La présente invention concerne un procédé de recherche de la direction de prédiction en codage vidéo intra-image.

L'invention trouve une application particulièrement avantageuse dans le domaine du codage vidéo intra-image comme décrit dans la norme H.264/MPEG-4 AVC.

D'une manière générale, le codage vidéo d'une image consiste à effectuer sur cette image des opérations dites de compression qui ont pour but de réduire la quantité d'informations à transmettre et donc de faciliter la transmission de l'image à travers les réseaux de télécommunication, tout en essayant d'obtenir la meilleure qualité possible pour l'image finale restituée.

Il existe un mode de codage dit inter-image, ou « codage inter », qui consiste, en substance, à effectuer une différence entre l'image courante et une image prédite à partir des images précédentes. Dans ce cas, seule cette différence est transmise, aboutissant ainsi à une compression élevée puisque la quantité d'informations à transmettre se trouve considérablement réduite.

On connaît un autre mode de codage dit intra-image, ou « codage intra », dans lequel l'image vidéo est codée par rapport à elle-même, sans référence ni comparaison à d'autres images, notamment les images précédentes.

Le codage intra est nécessaire dans une communication vidéo pour des initialisations, comme pour des synchronisations. Il a la particularité de limiter les dépendances d'un bloc d'image aux seuls blocs voisins. Ce mode de codage a l'avantage d'être robuste. Cependant, il présente l'inconvénient de moins bien compresser l'image.

Dans les normes de codage récentes, comme la norme H.264 de l'UIT-T, également connue sous le nom de MPEG-4 AVC à l'ISO/IEC/JTC1, le codage des blocs intra se fait par prédiction par rapport aux éléments d'image (pixels) voisins. La prédiction d'un bloc conduit à la construction d'un bloc virtuel pour le bloc courant, ce qui permet par comparaison entre bloc virtuel et bloc courant de déterminer la différence entre ces blocs et de transmettre dans le réseau cette différence accompagnée d'informations additionnelles permettant de reconstituer le bloc à partir de ladite différence. A la réception, l'image vidéo est reconstituée en appliquant, par des traitements appropriés, la différence transmise au bloc virtuel reconstruit au moyen desdites informations additionnelles. De cette manière, on retrouve en codage intra les avantages du codage inter d'une meilleure compression.

Pour améliorer ce type de codage intra, il a été défini des directions de prédiction qui permettent d'interpoler les pixels d'un bloc voisin pour prédire le bloc courant, à savoir construire un bloc virtuel associé à chaque direction de prédiction dont la meilleure comparaison au bloc courant déterminera la différence qui sera transmise dans le réseau. En d'autres termes, chaque direction de prédiction conduit à un traitement algorithmique différent conduisant à un bloc virtuel différent. Il y a donc autant de blocs virtuels pour le même bloc courant qu'il y a de directions de prédiction. Bien entendu, la direction de prédiction choisie est celle qui minimise la quantité d'informations à transmettre tout en gardant la meilleure qualité possible, c'est-à-dire, en d'autres termes, celle qui réalise le meilleur compromis qualité/compression.

Pour permettre à l'encodeur de décider de la meilleure direction de prédiction, une méthode classique consiste à calculer systématiquement tous les blocs virtuels pour toutes les directions de prédictions possibles, puis, par comparaison de tous ces blocs virtuels avec le bloc courant, à déterminer la direction qui donne la plus petite différence entre le bloc virtuel associé et le bloc courant.

Cependant, il s'avère que le calcul de toutes les interpolations nécessaires pour calculer l'ensemble des blocs virtuels est très coûteux en temps de calcul à cause de la complexité engendrée par cette méthode.

Le document ZHANG JIANNING ET AL : « A fast intra prediction method for H.264 video coding », PROCEEDINGS OF SPIE - THE INTERNATIONAL SOCIETY FOR OPTICAL ENGINEERING, APPLICATIONS OF DIGITAL IMAGE PROCESSING XXVI, 5-8 August 2003, San Diego, United States, Vol. 5203, pages 753-761, concerne la détermination de la direction optimale de prédiction intra à l'aide d'un procédé en deux étapes et à partir de quatre directions de prédiction initiales.

Le problème technique à résoudre par l'objet de la présente invention est de proposer un procédé de recherche de la direction de prédiction d'un bloc courant d'image en codage vidéo intra-image au standard H.264/MPEG-4 AVC qui soit plus performant en ce qui concerne le temps de calcul.

A cet effet, un objet de la présente invention concerne un procédé de recherche de la direction de prédiction d'un bloc courant d'image en codage vidéo intra-image au standard H.264/MPEG-4 AVC selon la revendication 1.

Ainsi, comme on le verra en détail plus loin, le procédé conforme à l'invention permet d'aboutir à la meilleure direction de prédiction sans avoir à calculer tous les blocs virtuels associés à toutes les directions de prédiction, mais en minimisant le nombre de directions testées par une méthode d'itération. Il s'ensuit clairement une réduction du temps de calcul correspondant.

Ladite itération est en outre arrêtée si la meilleure direction de prédiction courante est une direction voisine d'une direction immédiatement voisine de la direction initiale non retenue comme première direction principale. Cette disposition présente l'avantage de limiter encore le nombre de directions de prédiction testées et donc de concourir à la diminution du temps de calcul recherchée.

Enfin, l'invention prévoit également que lesdites directions initiales de prédiction sont les directions dites verticale et horizontale définies dans la norme H.264/MPEG-4 AVC. Ces directions sont en effet celles dont les interpolations sont les plus simples à calculer par rapport aux autres directions diagonales.

La description qui va suivre en regard des dessins annexés, donnés à titre d'exemples non limitatifs, fera bien comprendre en quoi consiste l'invention et comment elle peut être réalisée.
- La figure 1 est un diagramme des directions de prédiction retenues pour le codage intra dans la norme H.264/MPEG-4 AVC.
- La figure 2 est le diagramme de la figure 1 sur lequel sont indiquées les directions initiales de prédiction mises en oeuvre dans le procédé selon l'invention.
- La figure 3 est le diagramme des figures 1 et 2 sur lequel est précisée la nomenclature utilisée pour désigner les différentes directions de prédiction.
- La figure 4 est un organigramme du procédé conforme à l'invention.

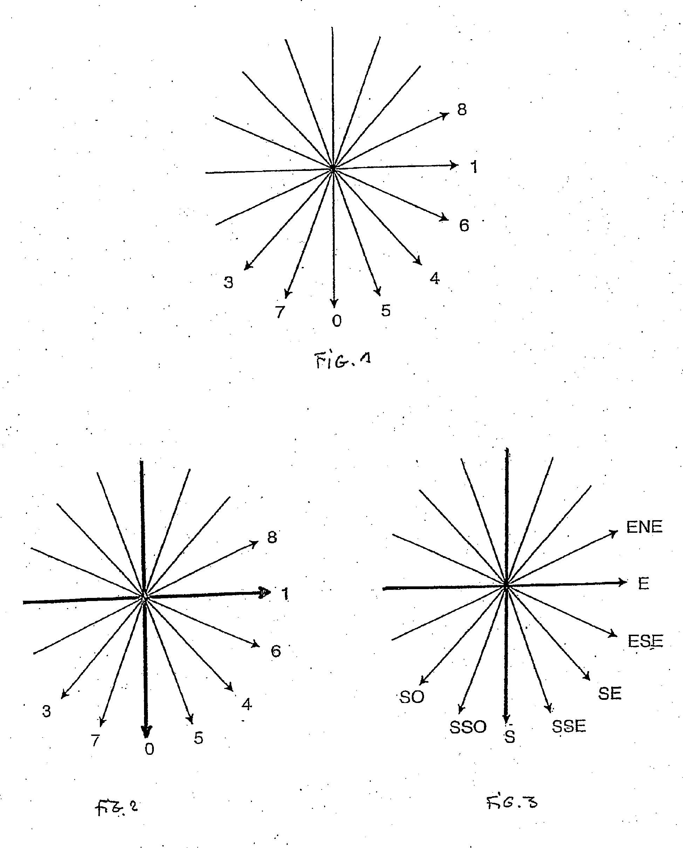

Sur la figure 1, on a représenté les huit directions de prédiction prévues par la norme H.264/MPEG-4 AVC pour effectuer le calcul des huit blocs virtuels d'un bloc courant parmi lesquels le bloc virtuel présentant la moindre différence avec le bloc courant déterminera la meilleure direction de prédiction, c'est-à-dire celle qui sera effectivement utilisée pour le codage intra de l'image.

Le calcul de comparaison de la meilleure direction de prédiction peut être effectué de différentes manières. On pourra par exemple utiliser des calculs du type somme des différences des valeurs absolues entre les pixels en cours de codage et leur prédiction. Il sera alors possible de comparer les sommes obtenues pour chaque direction et ne garder que la somme la plus faible.

La figure 3 donne la correspondance entre les directions de prédiction de la figure 1 et la nomenclature de ces directions qui sera utilisée dans la suite de ce mémoire.

La première étape du procédé, objet de l'invention, consiste dans un premier temps à choisir deux directions de prédiction de départ, que l'on appellera directions initiales, parmi les huit directions existantes.

Comme l'indique la figure 2, il y a avantage à choisir les directions dites verticale et horizontale , à savoir les directions « 0 » et « 1 » de la figure 1 ou S et E de la figure 3. En effet, les interpolations pour ces deux directions particulières sont très simples à calculer par rapport aux autres directions. L'évaluation de ces directions ne demande la consultation dans la mémoire du système que d'un seul pixel dont la valeur est simplement recopiée dans le bloc virtuel. Pour les autres directions, les complexités sont bien plus élevées et dépendent de la diagonale. On pourra se référer à la norme H.264/MPEG-4 AVC pour évaluer ces différentes complexités en fonction des directions de prédiction.

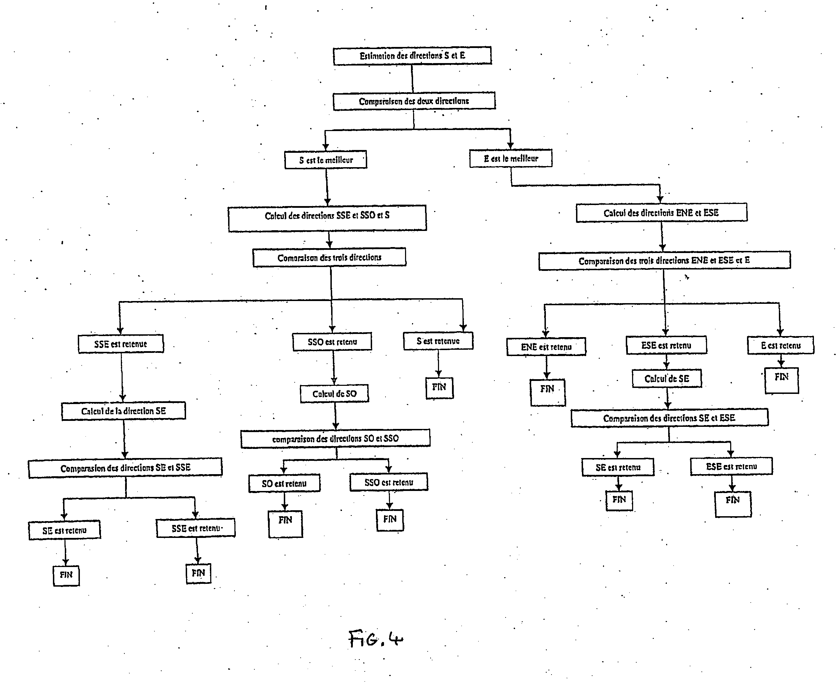

Ainsi qu'on peut le voir sur l'organigramme de la figure 4, les blocs virtuels calculés dans les deux directions initiales S et E sont comparés au bloc courant de manière à définir la meilleure de ces deux directions en terme de différence entre le bloc virtuel associé et le bloc courant. On supposera que la direction initiale de prédiction E est la meilleure et donc celle retenue pour la suite du procédé. Elle est alors désignée par « première direction principale ».

On prend alors en compte les deux directions de prédiction immédiatement voisines de la première direction principale E, à savoir les directions ENE et ESE, pour lesquels on calcule les blocs virtuels associées.

Les blocs virtuels associés aux directions de prédiction E, ENE et ESE sont comparés au bloc courant et on détermine celle de ces trois directions qui donne la plus petite différence avec le bloc courant.

Si la première direction principale E est la meilleure, alors on considère que cette direction est la direction de prédiction recherchée pour le codage intra du bloc. La direction recherchée étant trouvée, il est mis fin au procédé.

Il en est de même si la direction ENE est la meilleure. Etant située à une extrémité de l'ensemble des huit directions de prédiction possibles, le processus d'itération ne peut se poursuivre. Le procédé est arrêté en prenant cette direction ENE comme direction de prédiction recherchée.

Dans le cas contraire, la direction la meilleure est ESE que l'on appelle alors « seconde direction principale ».

Le procédé se poursuit par la prise en compte de la direction immédiatement voisine de la seconde direction principale ESE, qui n'est pas la première direction principale E. Dans l'exemple choisi, il s'agit de la direction de prédiction SE. Le bloc virtuel associé à la direction SE est calculé et comparé à son tour au bloc courant.

Deux situations peuvent se produire : ou bien la seconde direction principale ESE est la meilleure et constitue ainsi la direction de prédiction recherchée, il est alors mis fin au procédé, ou bien la direction SE est la meilleure. Dans ce dernier cas, on peut continuer l'itération vers la direction SSE de la même façon en comparant les directions SE et SSE. Mais on peut également arrêter l'itération en considérant, comme cela est montré sur la figure 4, que la direction SE est la meilleure en faisant l'hypothèse que la direction SSE proche de la direction initiale S non retenue ne peut être meilleure que la direction SE. De cette manière, on gagne encore du temps de calcul à ne pas effectuer une opération qui a toute chance de se révéler inutile.

Le procédé qui vient d'être décrit est exécuté par un dispositif d'encodage comprenant des moyens aptes à exécuter les étapes précédemment explicitées. De préférence, ce dispositif d'encodage est un dispositif informatique intégrant un module logiciel comprenant des instructions logicielles pour commander l'exécution par le dispositif d'encodage des étapes du procédé. Par conséquent, l'invention concerne également un module logiciel pour un dispositif d'encodage comprenant des instructions logicielles pour faire exécuter le procédé précédemment décrit par le dispositif d'encodage, ainsi qu'un dispositif d'encodage comprenant un tel module logiciel. Le module logiciel peut être stocké dans ou transmis par un support de données. Celui-ci peut être un support matériel de stockage, par exemple un CD-ROM, une disquette magnétique ou un disque dur, ou bien un support transmissible tel qu'un signal électrique, optique ou radio.

## Revendications

1. Procédé de recherche de la direction de prédiction d'un bloc courant d'image en codage vidéo intra-image au standard H.264/MPEG-4 AVC, comprenant des étapes de calcul de blocs, dits blocs virtuels, associés audit bloc courant, par interpolation, dans des directions de prédiction données, d'éléments d'image de blocs voisins dudit bloc courant, **caractérisé en ce que** ledit procédé comprend les étapes suivantes :
- choix de deux directions (E, S) de prédiction, dites directions initiales, parmi les directions de prédiction données, les deux directions initiales étant la direction horizontale et la direction verticale,
- calcul des blocs virtuels associés auxdites directions initiales (E, S) de prédiction,
- comparaison desdits blocs virtuels avec le bloc courant et choix de la direction initiale (E) de prédiction, dite première direction principale, qui minimise la différence entre le bloc virtuel associé et le bloc courant,
- calcul des blocs virtuels associés aux directions (ENE, ESE) de prédiction immédiatement voisines de ladite première direction principale (E),
- comparaison des blocs virtuels associés à la première direction principale (E) et auxdites directions immédiatement voisines (ENE, ESE) avec le bloc courant, et détermination de la meilleure direction de prédiction qui minimise la différence entre le bloc virtuel associé et le bloc courant,
- si ladite meilleure direction de prédiction est ladite première direction principale (E) ou une (ENE) des directions immédiatement voisines si elle est située à une extrémité de l'ensemble des directions de prédiction, cette meilleure direction est la direction de prédiction recherchée, sinon,
- choix de la direction (ESE) de prédiction, dite seconde direction principale, qui minimise la différence entre le bloc virtuel associé et le bloc courant,
- calcul du bloc virtuel associé à la direction (SE) de prédiction immédiatement voisine de la seconde direction principale (ESE), différente de la première direction principale (E),
- comparaison des blocs virtuels associés à la seconde direction principale (ESE) de prédiction et ladite direction immédiatement voisine (SE) de la seconde direction principale avec le bloc courant, et détermination de la meilleure direction de prédiction qui minimise la différence entre le bloc virtuel associé et le bloc courant,
- si ladite meilleure direction de prédiction est ladite seconde direction principale (ESE) ou la direction immédiatement voisine (SE) de la seconde direction principale si elle est située à une extrémité de l'ensemble des directions de prédiction, cette meilleure direction est la direction de prédiction recherchée, sinon,
- ladite direction immédiatement voisine (SE) de la seconde direction principale est la direction de prédiction recherchée.

2. Dispositif d'encodage comprenant des moyens aptes à exécuter les étapes du procédé selon la revendication 1.

3. Dispositif d'encodage selon la revendication 2, intégrant un module logiciel comprenant des instructions logicielles pour commander l'exécution par le dispositif d'encodage des étapes dudit procédé.

## Patentansprüche

1. Verfahren zur Ermittlung der Prädiktionsrichtung eines aktuellen Bildblocks bei der Intra-Bild-Videocodierung gemäß dem Standard H.264/MPEG-4 AVC, welches Schritte der Berechnung von dem aktuellen Block zugeordneten Blöcken, virtuelle Blöcke genannt, durch Interpolation von Bildelementen von dem aktuellen Block benachbarten Blöcken in vorgegebenen Prädiktionsrichtungen umfasst, **dadurch gekennzeichnet, dass** das Verfahren die folgenden Schritte umfasst:
- Auswahl von zwei Prädiktionsrichtungen (E, S), Anfangsrichtungen genannt, aus den vorgegebenen Prädiktionsrichtungen, wobei die zwei Anfangsrichtungen die horizontale Richtung und die vertikale Richtung sind,
- Berechnung der virtuellen Blöcke, die den Prädiktions-Anfangsrichtungen (E, S) zugeordnet sind,
- Vergleich der virtuellen Blöcke mit dem aktuellen Block und Wahl der Prädiktions-Anfangsrichtung (E), erste Hauptrichtung genannt, welche die Differenz zwischen dem zugeordneten virtuellen Block und dem aktuellen Block minimiert,
- Berechnung der virtuellen Blöcke, die den Prädiktionsrichtungen (ENE, ESE) zugeordnet sind, welche der ersten Hauptrichtung (E) unmittelbar benachbart sind,
- Vergleich der virtuellen Blöcke, die der ersten Hauptrichtung (E) und den unmittelbar benachbarten Richtungen (ENE, ESE) zugeordnet sind, mit dem aktuellen Block und Bestimmung der besten Prädiktionsrichtung, welche die Differenz zwischen dem zugeordneten virtuellen Block und dem aktuellen Block minimiert,
- falls diese beste Prädiktionsrichtung die erste Hauptrichtung (E) oder eine (ENE) der unmittelbar benachbarten Richtungen ist, falls sie sich an einem Ende der Menge der Prädiktionsrichtungen befindet, ist diese beste Richtung die gesuchte Prädiktionsrichtung; andernfalls,
- Wahl der Prädiktionsrichtung (ESE), zweite Hauptrichtung genannt, welche die Differenz zwischen dem zugeordneten virtuellen Block und dem aktuellen Block minimiert,
- Berechnung des virtuellen Blocks, welcher der Prädiktionsrichtung (SE) zugeordnet ist, die der zweiten Hauptrichtung (ESE) unmittelbar benachbart ist und von der ersten Hauptrichtung (E) verschieden ist,
- Vergleich der virtuellen Blöcke, die der zweiten Prädiktions-Hauptrichtung (ESE) und der Richtung (SE), die der zweiten Hauptrichtung unmittelbar benachbart ist, zugeordnet sind, mit dem aktuellen Block und Bestimmung der besten Prädiktionsrichtung, welche die Differenz zwischen dem zugeordneten virtuellen Block und dem aktuellen Block minimiert,
- falls diese beste Prädiktionsrichtung die zweite Hauptrichtung (ESE) oder die der zweiten Hauptrichtung unmittelbar benachbarte Richtung (SE) ist, falls sie sich an einem Ende der Menge der Prädiktionsrichtungen befindet, ist diese beste Richtung die gesuchte Prädiktionsrichtung; andernfalls,
- ist die der zweiten Hauptrichtung unmittelbar benachbarte Richtung (SE) die gesuchte Prädiktionsrichtung.

2. Codierungsvorrichtung, welche Mittel umfasst, die geeignet sind, die Schritte des Verfahrens nach Anspruch 1 auszuführen.

3. Codierungsvorrichtung nach Anspruch 2, in die ein Software-Modul integriert ist, welches Software-Anweisungen zum Steuern der Ausführung der Schritte des Verfahrens durch die Vorrichtung umfasst.

## Claims

1. Method for seeking the prediction direction for a current image block in intra-image video coding to the H.264/MPEG-4 AVC standard, comprising steps of calculating blocks, termed virtual blocks, associated with said current block, by interpolation, in given prediction directions, of image elements of blocks adjacent to said current block, **characterized in that** said method comprises the following steps:
- choosing two prediction directions (E, S), termed initial directions, from among the given prediction directions, the two initial directions being the horizontal direction and the vertical direction,
- calculating the virtual blocks associated with said initial prediction directions (E, S),
- comparing said virtual blocks with the current block and choosing the initial prediction direction (E), termed first main direction, that minimizes the difference between the associated virtual block and the current block,
- calculating the virtual blocks associated with the prediction directions (ENE, ESE) immediately adjacent to said first main direction (E),
- comparing the virtual blocks associated with the first main direction (E) and with said immediately adjacent directions (ENE, ESE) with the current block, and determining the best prediction direction that minimizes the difference between the associated virtual block and the current block,
- if said best prediction direction is said first main direction (E) or one (ENE) of the immediately adjacent directions if it is situated at an end of the set of prediction directions, this best direction is the sought prediction direction, otherwise,
- choosing the prediction direction (ESE), termed second main direction, that minimizes the difference between the associated virtual block and the current block,
- calculating the virtual block associated with the prediction direction (SE) immediately adjacent to the second main direction (ESE), different from the first main direction (E),
- comparing the virtual blocks associated with the second main prediction direction (ESE) and said direction (SE) immediately adjacent to the second main direction with the current block, and determining the best prediction direction that minimizes the difference between the associated virtual block and the current block,
- if said best prediction direction is said second main direction (ESE) or the direction (SE) immediately adjacent to the second main direction if it is situated at an end of the set of prediction directions, this best direction is the sought prediction direction, otherwise,
- said direction (SE) immediately adjacent to the second main direction is the sought prediction direction.

2. Encoding device comprising means able to execute the steps of the method according to Claim 1.

3. Encoding device according to Claim 2, incorporating a software module comprising software instructions for commanding the execution, by the encoding device, of the steps of said method.
